Europäisches Patentamt

European Patent Office

Office européen des brevets

(11) Publication number: **0 405 722 A1**

## EUROPEAN PATENT APPLICATION

(21) Application number: **90304579.7**

(22) Date of filing: **26.04.90**

(51) Int. Cl.5: **C08G 18/08, C08G 18/10, C08G 18/32**

(30) Priority: **26.05.89 GB 8912172**

(43) Date of publication of application:
**02.01.91 Bulletin 91/01**

(84) Designated Contracting States:
**DE ES FR GB IT SE**

(71) Applicant: **BOSTIK LIMITED**
**Ulverscroft Works Ulverscroft Road**
**Leicester LE4 6BW(GB)**
(84) **GB**

Applicant: **BOSTIK FRANCE SA**
**12 rue Truillot**
**F-94203 Ivry-sur-Seine(FR)**
(84) **ES**

Applicant: **Bostik GmbH**
**Gattenhöferweg 36**
**D-6370 Oberursel(DE)**
(84) **DE**

Applicant: **BOSTIK AB**
**Strandbadsvaegen**
**S-25229 Helsingborg(SE)**
(84) **SE**

(72) Inventor: **Piestert, Gerhard**
**Ahornweg 11**
**D-6870 Schwetzingen(DE)**
Inventor: **Haar, Wolfgang**
**Brokenberg 1A,**
**D-4322 Sprockhovel 2(DE)**

(74) Representative: **Harrison, Gordon Donald et al**
**FORRESTER & BOEHMERT**
**Widenmayerstrasse 4/14/I**
**D-8000 München 22(DE)**

(54) Moisture-curing, one-part polyurethane compositions.

(57) A moisture-curing, one-part polyurethane comprising a prepolymer prepared from a polyol and having terminal isocyanate groups is characterised by filling it with a molecular sieve free from adsorbed water and loaded with a primary or secondary amine with 2 or more functionalities.

The molecular sieve may be loaded with up to 25 wt% of amine.

The composition cures rapidly without $CO_2$ blister formation, higher levels of - NCO lead to improved adhesion and other mechanical properties, as well as enhanced storage stability.

## MOISTURE-CURING, ONE-PART POLYURETHANE COMPOSITIONS

The present invention relates to moisture-curing, one-part polyurethane compositions which can be used as adhesive, sealant, moulding or coating compositions.

Such one-part polyurethane compositions comprise a prepolymer with terminal isocyanate groups prepared from a polyol and which react with ambient moisture to effect a cure. The ambient water necessary for the curing process may be derived from the ambient atmosphere or from the substrate to be bonded.

One-part polyurethane adhesive and sealant compositions are well-known which contain isocyanate. The rate of cure of these compositions is limited, because of foaming of the mixture due to reaction of isocyanate with water, often leading to $CO_2$ blistering.

The level of free reactive - NCO in the composition determines the amount of urea in the cured composition and this influences the level of the mechanical properties of the cured product. If the level of free -NCO is low, the adhesion of the polyurethane composition is low. Furthermore, low levels of - NCO also lead to limited storage stability.

It is an object of the present invention to provide a one-part polyurethane composition which can be cured at a reasonably fast rate without $CO_2$ blister formation.

According to the present invention, we provide a moisture-curing one-part polyurethane composition comprising a prepolymer prepared from a polyol and having terminal isocyanate groups characterised in that the composition is filled with a molecular sieve free from adsorbed water and loaded with a primary or secondary amine with 2 or more functionalities.

Curing of the composition is initiated by ambient moisture but the water does not take part in the chemical reaction, thus avoiding the troublesome formation of $CO_2$ and the consequent foaming problems. Since the NCO-curing process takes place with the freed amine, the urea bridges are directly formed, so that the number of urea groups in the cured composition can be doubled, having the positive effect of improved mechanical properties.

The water displaces the amine rapidly from the molecular sieve so that the amine is available as a highly reactive reactant for - NCO groups.

Moisture-curing one-part polyurethane compositions according to the present invention, containing an amine-loaded molecular sieve prepared with stringent exclusion of water, show remarkable stability, both at room temperature and at elevated temperatures. Indeed, curing by thermal desorption does not take place; after heating to 120°C for four hours, no increase in viscosity is observed.

The molecular sieve used in the present invention may be loaded with up to 25 wt% of amine.

The present invention provides a one-part polyurethane composition which quickly cures to an acceptable product, with a high degree of uniformity.

It is known to use molecular sieves loaded with various reactive materials, including amines as well as peroxides, hydrogensulphides etc., as reactive components of e.g. lacquer systems or rubber components. Amine-loaded molecular sieves have also been used as secondary accelerators in neoprene, polyacrylontrile and polybutadiene formulations. However, the amines in these cases are tertiary amines. Furthermore, commercially available amine-loaded molecular sieves have not been found suitable for use in the present invention since the resulting compositions have been found not to be stable at elevated temperature. It is thought that this may possibly be due to the fact that these commercial amine-loaded molecular sieves may contain significant amounts of water which could interfere with the reaction and weaken the adsorption of the amine.

The level of reactive free - NCO in compositions according to the present invention may be increased considerably, permitting the achievement of higher cohesion-and adhesive-values without the problems of $CO_2$ bubble formation.

The use of amine-loaded molecular sieves in the compositions of the present invention permits the use of aliphatic isocyanates which are of low reactivity and which, even in the presence of suitable catalysts, react only slowly with water, but spontaneously with polyamines. Formulations without or with low concentrations of catalysts reveal better hydrolytic and thermal stability.

The isocyanate-terminated prepolymers used in compositions according to the invention may be derived from polyols such as polyester polyols, polyether polyols, polybutadiene polyols, polyacrylate polyols, polyisoprene polyols and others. The polyols are reacted with excess isocyanate, leading to terminal isocyanate groups which are available for further reactions. Representative examples of isocyanates are 2.4- or 2.6 tolylene diisocyanate (TDI), 4.4'-diphenylene methane diisocyanate (MDI), 4.4'-dicyclohexyl, methane diisocyanate (HMDI), isophorone diisocyanate (IPDI) etc.

Molecular sieves or pore sizes 4Å and 5Å have been effective in all tests.

Representative examples of polyamine to be absorbed on the molecular sieves are ethylene diamine, propylene diamine, diethylene triamine, triethylene tetramine, etc.

In order that the invention may be better understood preferred Examples will now be described in greater detail.

EXAMPLES

A. Preparation of amine-loaded molecular sieve

(a) 3g ethylene diamine were added to 20g molecular sieve (4Å) in 50g dry 'Mesamoll' - alkyl sulphonic acid ester of phenol - (Registered Trade Mark - Bayer) (corresponding to approx. 75% saturation). After 10 days the free amine remaining in the 'Mesamoll' was determined. This indicated that 98.7% of the polyamine was adsorbed.

(b) 3.6g ethylene diamine were added to 20g molecular sieve (5Å) in 50g dry 'Mesamoll' (corresponding to approx. 90% saturation). After two weeks the free amine remaining in the 'Mesamoll' was determined. This indicated that 98.3% of the polyamine was adsorbed.

It is not necessary to separate the thus-loaded molecular sieves from the 'Mesamoll'; the suspensions may be used as such in the preparation of the polyurethane compositions.

B. Formulation with prepolymer

EXAMPLE 1

25g 'Mesamoll' and 15.63g MDI were added to 18.25g of the suspension from (a). The mixture was stirred vigorously for 10 minutes. Then 100g 'Desmophen' 1900 U - polyether diol of polypropylene oxide (equivalent weight about 1000) - (Registered Trade Mark - Bayer) and 0.1% dibutyltin dilaurate were added and the mixture kept at 80° C for 2 hours. The isocyanate content of the resulting prepolymer was 21 mVal.

The resulting composition cured in contact with air (23° C; 50% R.H.) without the formation of $CO_2$ bubbles.

In comparison, curing of a similar composition without the amine-loaded molecular sieve produced severe foaming.

EXAMPLE 2

15.61g MDI were added to 29.44g of suspension (b) and 13.81g 'Mesamoll'. The mixture was stirred vigorously for 10 minutes. Then 100g 'Desmophen' 1910 U - polyether triol of polypropylene oxide - (equivalent weight about 1300) -and 0.1% dibutyltin dilaurate were added and the mixture kept at 80° C for 2 hours. The isocyanate content of the resulting prepolymer was 44 mVal.

Curing of this composition was effected in air (23° C; 50% R.H.) without foaming or $CO_2$ blisters.

Again, a similar composition from which the amine-loaded molecular sieve was omitted foamed unacceptably when cured in air (23° C; 50% R.H.).

Claims

1. A moisture-curing one-part polyurethane composition comprising a prepolymer prepared from a polyol and having terminal isocyanate groups characterised in that the composition is filled with a molecular sieve loaded with a primary or secondary amine with 2 or more functionalities.

2. A moisture-curing polyurethane composition according to claim 1 wherein the molecular sieve may be loaded with up to 25 wt% of amine.

3. A moisture-curing polyurethane composition according to any one of the preceding claims wherein the pores of the molecular sieve are 4Å to 5Å.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2303844 (FLUIDMASTER INC) *example 4,12; claims 1-4; p 7, L 10- p8, L 38 * --- | 1-3 | C08G18/08 C08G18/10 C08G18/32 |
| X | DE-A-2037458 (THE GOODYEAR TIRE & RUBBER CO.) * claims 1-11 * --- | 1-3 | |
| A | US-A-4341689 (J.DOSHI ET AL) *whole document* ----- | 1-3 | |

TECHNICAL FIELDS
SEARCHED (Int. Cl.5 )

C08G
C08K
C08L

The present search report has been drawn up for all claims

| Place of search | Date of completion of the search | Examiner |
|---|---|---|
| THE HAGUE | 10 AUGUST 1990 | WILSON A.J.D. |